(19) Europäisches Patentamt
European Patent Office
Office européen des brevets

(11) **EP 3 394 636 B1**

(12) **EUROPÄISCHE PATENTSCHRIFT**

(45) Veröffentlichungstag und Bekanntmachung des Hinweises auf die Patenterteilung:
**19.04.2023   Patentblatt 2023/16**

(21) Anmeldenummer: **16763719.8**

(22) Anmeldetag: **24.08.2016**

(51) Internationale Patentklassifikation (IPC):
*G01S 13/76* (2006.01)   *G01S 17/74* (2006.01)
*G01S 15/74* (2006.01)   *G01S 7/02* (2006.01)
*G01S 7/03* (2006.01)   *G01S 7/40* (2006.01)
*G01S 13/87* (2006.01)   *G06K 7/10* (2006.01)

(52) Gemeinsame Patentklassifikation (CPC):
**G01S 17/74; G01S 7/023; G01S 7/03;
G01S 7/4008; G01S 13/76; G01S 13/878;
G01S 15/74**

(86) Internationale Anmeldenummer:
**PCT/EP2016/001426**

(87) Internationale Veröffentlichungsnummer:
**WO 2017/063724 (20.04.2017 Gazette 2017/16)**

(54) **FUNKBASIERTE POSITIONSBESTIMMUNG MIT HOCH GENAUER VERZÖGERUNG IM TRANSPONDER**

RADIO-BASED POSITIONING PROCESS WITH A HIGHLY PRECISE DELAY IN THE TRANSPONDER

DÉTERMINATION DE POSITION PAR ONDES RADIO À TEMPORISATION DE GRANDE PRÉCISION DANS LE TRANSPONDEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.10.2015   DE 102015013453
06.07.2016   DE 102016008217
09.07.2016   DE 102016008390**

(43) Veröffentlichungstag der Anmeldung:
**31.10.2018   Patentblatt 2018/44**

(73) Patentinhaber: **BARTELS, Oliver
80935 München (DE)**

(72) Erfinder: **BARTELS, Oliver
80935 München (DE)**

(56) Entgegenhaltungen:
**WO-A1-2004/027449       DE-A1- 10 255 880
US-A- 4 325 146       US-A- 4 532 516
US-B1- 6 473 028**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Der Erfindung liegt die Aufgabe zugrunde, die Entfernung zwischen einem beweglichen Objekt und jedenfalls einer ortsfesten Messstation mittels eines Funksignals präzise zu messen.

Hierzu bietet sich sowohl eine Laufzeitmessung in der Zeitebene, bekannt durch RADAR-Systeme aller Art, wie auch eine indirekte Laufzeitmessung durch eine Analyse z.B. eines Chirp-Signals in der Frequenzebene an. Diese Messungen können durch Winkelbestimmungen unterstützt werden, wobei mittels Phased Array Antenne oder MIMO auch eine direkte Abschätzung des Winkels des eingehenden Signals möglich ist.

Der übliche Aufbau eines solchen Systems besteht aus mehreren ortsfesten Abfragestationen, welche ein Abfragesignal zum bewegten Transponder schicken, dieser reagiert auf die Abfrage mit einem Antwortsignal, welches wiederum von einer oder mehreren Abfragestationen empfangen wird und aus der Signalverzögerung aufgrund der konstanten Lichtgeschwindigkeit die Entfernung errechnet wird. Die genaue Position ergibt sich dann durch Triangulation. Solche Systeme sind in der Luftfahrt als Sekundärradar sowie DME (Distance Measurement Equipment) bekannt. Zu diesen Systemen ist eine Vielzahl an Literatur verfügbar, vergleiche EP0740801B1, WO2007131987A1, US3969725A, DE165546.

Denkbar ist auch, dass mehrere Stationen zueinander korrelierte Signale senden und die Auswertung der Laufzeitdifferenzen in der mobilen Einheit erfolgt, auf dieser Basis arbeiten u.a. satellitenbasierte Positionsbestimmungssysteme wie GPS, Glonass und Galileo. Die exakte Bestimmung der Laufzeitunterschiede erfolgt hier ebenfalls in der Zeitebene mittels Korrelation.

Im Bereich großer Distanzen mit Genauigkeitsanforderungen im Meter-Bereich und bei freier Sicht zum Himmel arbeiten all dieses Systeme ausgezeichnet. Ein bisher nur sehr unbefriedigend gelöstes Problem ist die genaue Positionsbestimmung im Nahbereich der Messstationen mit Genauigkeiten im cm-Bereich speziell in geschlossenen Gebäuden.

Das Kernproblem bei der Laufzeitmessung im Nahbereich ist die hohe Lichtgeschwindigkeit, welche bei einer direkten Messung von kurzen Distanzen zu Laufzeiten im Nanosekunden-Bereich führt. Daher ist bisher der direkte Ansatz laufzeitbasierter RADAR-Systeme für kurze Distanzen mit äußersten Schwierigkeiten verbunden. Der Übergang auf langsamere Medien wie Schall ist grundsätzlich möglich, liefert aber ebenfalls aufgrund der Medieneigenschaften nur begrenzt gute Ergebnisse abhängig von der Anwendung. So funktionieren Abstandsmesssysteme in Stoßstangen von Kraftfahrzeugen als Einparkhilfe ausgezeichnet, die Positionsbestimmung von Robotern damit lässt aber sehr zu wünschen übrig.

Ein wesentliches Problem hierbei ist, dass die Signallaufzeit kürzer als die Pulsdauer ist, womit der RADAR-Empfänger genau dann vom eigenen Sender mit einem starken Signal verstopft wird, wenn das zu messende Objekt direkt durch Reflexion oder unmittelbar mittels Transponder antwortet.

Bei einer indirekten Messung in der Frequenzebene z.B. mittels FMCW - vergleiche DE19743132C2 - oder Chirp-Signalen - vergleiche US8976060B2 - stößt man an das Problem, dass durch die regulatorisch begrenzten Frequenzbänder eine eindeutige Identifizierung des kürzesten Wegs nicht möglich ist.

Denn das Funksignal wird sich gerade in bebauter Umgebung stets über mehrere Wege ausbreiten, interessant für die Laufzeitmessung ist aber nur der direkte kürzeste Weg. Bedingt durch die Begrenzung des Frequenzbereichs ergibt sich aufgrund der Ansetzung der bekannten Cramer Rao Schranke - vergleiche Sahinoglu, Z., Gezici, S & Guvenc, I. (2008), Ultra-wideband Positioning Systems, Cambridge - auf die nötige Fouriertransformation eine naturgesetzliche Begrenzung der Systemgenauigkeit.

Dieses Problem ist bei einer Messung in der Zeitebene deutlich entschärft, weil das System schlicht auf das erste eingehende Signal - die Wellenfront - reagiert, bei der es sich bei konstanter Lichtgeschwindigkeit naturgesetzlich um das Signal mit der kürzesten Distanz handelt.

Daher wäre eine Messung in der Zeitebene zu bevorzugen, sie scheitert bisher jedoch daran, dass das Anfragesignal zum Transponder in diesem hoch genau mit einer Präzision im PikosekundenBereich verzögert werden muss, damit der Empfänger in der Abfrageeinheit eben das Echo des Transponders und nicht sein eigenes Abfragesignal misst.

Daher käme nach dem Stand der Technik eine analoge Verzögerung oder Frequenzumsetzung in Frage. Eine Frequenzumsetzung in ein anderes Band wäre grundsätzlich möglich, scheitert aber an der Frequenzknappheit und den dabei mit umgesetzten Störsignalen. Würde man hier schmalbandig filtern, dann würde das System anstelle einer Laufzeitmessung eine Messung der Gruppenlaufzeit der Filter vornehmen, die leider frequenz- und z.B. auch temperaturabhängig ist. Das gilt auch für die Verzögerung mittels SAW Filter infolge Ausdehnung des Trägermaterials.

Zum allgemeinen Stand der Technik zur Messung kurzer Distanzen in der Zeitebene sei beispielhaft auf DE19941428A1 verwiesen. Die Schrift beschreibt den Einsatz einer laufzeitbasierten Kurzdistanzmessung zur Verwendung in einem Schließsystem unter Nutzung eines Verzögerungselements mit fester Laufzeit im Transponder. Wie diskutiert lässt diese Anordnung allerdings keine hohe Genauigkeit erwarten, weshalb sie lediglich zur ungefähren Distanzabschätzung zwecks Sperrung von ungewollten Schließvorgängen bei zu großer Entfernung des Schlüssels vom Schloss vorgesehen ist.

Um die Verzögerungszeit innerhalb der Abfrageeinheit oder des Transponders anzupassen, sind nach dem Stand der Technik auch Geräte mit variabel einstellbaren Verzögerungselementen bekannt, ein Beispiel dafür findet sich in DE10255880A1. Allerdings fehlt für die präzise Einstellung der Verzögerungszeit im System wiederum die hoch genaue Referenz, weshalb das variable Verzögerungselement hier zum Erreichen eines anderen Ziels, nämlich der Erkennung einer Relais-Attacke, und nicht zur Erhöhung der Präzision eingesetzt wird. Die diskutierte Abhängigkeit der exakten Verzögerungsdauer der variablen Verzögerungselemente von Umweltbedingungen unabhängig vom vorgegebenen Sollwert verhindert ebenso eine dauerhaft stabile Kalibrierung mit externen Messmitteln.

Dem Stand der Technik entspricht ebenfalls US4532516A für die Distanzbestimmung von Flugzeugen mit einem Roundtrip, wobei hier auch eine Kalibrierung der Verzögerungszeit im Transponder vorgenommen wird. Diese erfolgt aber klassisch mit einem Testsignal, ist vergleichsweise aufwendig und aufgrund der Auslegung für Flugzeuge auch grundlegend nicht für kurze Distanzen geeignet. Einen weiteren Überblick über den Stand der Technik geben auch WO2004/027449A1, US6473028B1 und US4325146A. Nachteilig bei all diesen Lösungen ist, dass sie verhältnismäßig aufwendig und auf kurze Distanz nicht besonders genau sind.

Der Erfindung liegt demnach die Aufgabe zugrunde, eine Entfernungsmessung mittels Laufzeitmessung in der Zeitebene ähnlich einem RADAR-System auf kurze Entfernungen dadurch zu ermöglichen, dass im Transponder eine hoch genaue Verzögerung des Abfragesignals stattfindet und somit das Antwortsignal mit einer exakt definierten Verzögerung zum Abfragesignal zurückgesendet wird.

Das Problem wird erfindungsgemäß durch das in Patentanspruch 1 beschriebene System gelöst, dessen Funktion im folgenden anhand eines Ausführungsbeispiels erläutert wird:

Das Beispiel in Bild 1 zeigt ein erfindungsgemäßes System. Im oberen Teil des Bilds ist die Abfrageeinheit, im unteren der Transponder schematisch dargestellt.

Zunächst erzeugt der Oszillator (OSC1) ein hochfrequentes Trägersignal vorzugsweise im Mikrowellen- oder Millimeterwellen-Band, das über den Pulsmodulator (PM1) moduliert und nach Verstärkung über den Leistungsverstärker (PA1) über die Antenne (ANT1) als Abfragesignal abgestrahlt werden kann.

Der Abfragepuls wird jetzt in einem Zeitraster erzeugt, welches durch den deutlich langsameren quarzgenauen Taktgeber (OSC2) vorgegeben wird. Bei jeder steigenden Flanke des quarzgenauen Takgebers (OSC2) wird mittels des Monoflop (MF1) ein kurzer Puls mit einer durch das Monoflop definierten Zeitdauer erzeugt. Die Aufteilung in Bild 1 erfolgt zum besseren Verständnis schematisch, in der Realität werden all diese Funktionen digital implementiert sein und von einem genauen Quarztakt hoher Frequenz abgeleitet werden.

Der Puls wird sodann über das variable Verzögerungselement (VDLY1) verzögert, die Verzögerung sollte mit einer Auflösung im Pikosekundenbereich erfolgen und kann daher durchaus analoge Elemente beinhalten. Eine hohe absolute Genauigkeit ist hier nicht erforderlich, nur eine zeitliche Stabilität der Verzögerung. Ein anderer bevorzugter Ansatz ist die integrierte Erzeugung und Verzögerung des Taktgeber- (OSC2) Ausgangssignals als DDS-Sinus mit Einstellung eines Phasenversatzes.

Nach analoger Filterung und Auswertung mittels eines schnellen Komparators mit nachgeschaltetem Monoflop oder anderweitiger Pulsdauerbegrenzung z.B. durch Verundung mit einem weiteren Signal steht dann ebenfalls der Abfragepuls zur Verfügung.

Alternativ kann die Frequenzrampe zur Erzeugung eines Chirp-Impulses für den in einem späteren Abschnitt beschriebenen erfindungsgemäßen Chirp-Detektor geeignet verzögert oder phasenversetzt werden, um dessen Nulldurchgang zeitlich zu beeinflussen. Denkbar ist hierzu auch das Verstellen eines Frequenzversatzes zwischen Sender und Empfänger an einem der PLL Synthesizer.

Der so erzeugte Abfragepuls wird dann zum Pulsmodulator (PM1) geführt und generiert somit das von der Antenne (ANT1) abgestrahlte hochfrequente Abfragesignal, welches vom Transponder mittels seiner Antenne (ANT2) empfangen wird.

Dort wird es über einen Low Noise Amplifier (LNA1) verstärkt und dem schnellen Detektor (DET1) zugeführt. Überschreitet das Ausgangssignal des Detektors (DET1) einen gewissen Wert, dann löst der Schmitt-Trigger (ST1) aus und legt an den Eingang der aus den D-Flip-Flops bestehenden Registerkette (DFF1 bis DFF4) ein Signal an.

Dieses wird mit der nächsten Flanke des vom lokalen Taktgeber (OSC4) erzeugten Registertakts übernommen und wenige Takte später mit Anliegen am Ausgang vom D-Flip-Flop (DFF3) über das UND-Gatter (AND1) an den Pulsmodulator (PM2) für das Antwortsignal geleitet, so nicht schon im vorangegangenen Taktzyklus ein Signal generiert wurde. Denn dieses blockiert einen Takt später, verzögert durch ein D-Flip-Flop (DFF4), mittels des invertierten Eingangs von UND-Gatter (AND1) das Antwortsignal.

Somit wird effektiv die Pulslänge begrenzt, in einer besonders bevorzugten Ausführungsform kann jedoch über weitere Logikgatter ähnlich dem UND-Gatter (AND1) an den vorangegangenen Ausgängen des D-Flip-Flop (DFF1) ein bestimmtes Muster für einen Antwortpuls verlangt werden, damit ein Antwortpuls erzeugt wird.

Der Pulsmodulator (PM2) erzeugt jetzt durch Modulation des vom Oszillator (OSC3) gestellten Trägers - dieser liegt vorzugsweise im selben Frequenzband wie jener des Anfragesignals - die mittels dem Leistungsverstärker (PA2) verstärkte und über die Antenne (ANT3) abgestrahlte Antwort.

Jene wird jetzt von der Abfragestation von der Antenne (ANT4) empfangen, über den Low Noise Amplifier (LNA2) verstärkt, im Detektor (DET2) demoduliert und vom Analog/Digital-Wandler (DSO-ADC) ausgewertet. In einer bevorzugten Ausführung wird dazu mit einer Technologie vergleichbar jener, die aus der Literatur für digitale Speicheroszilloskope bekannt ist, das Signal nach dem Trigger aus dem Abfragepuls digitalisiert, wodurch eine genaue Bestimmung der Laufzeit unter Anrechnung der durch die Registerkette bedingten Verzögerung möglich ist.

Man könnte jetzt meinen, dass die Verzögerung durch die Registerkette sehr undefiniert erfolgt, weil der Zeitraum zwischen dem Eintreffen des Eingangsignals aus dem Schmitt-Trigger (ST1) am D-Eingang vom D-Flip-Flop (DFF1) und der Flanke aus dem Transponder-Oszillator (OSC4) am Takteingang vom D-Flip-Flop (DFF1) durch die zum Oszillator (OSC2) der Abfrageeinheit asynchronen Schwingungen vom Transponder-Taktgeber (OSC4) unbestimmt ist.

Allerdings sind beide Oszillatoren als Quarzoszillatoren genau genug, um für einen längeren Zeitraum genau genug auch ohne Synchronisation die Phasenlage halten zu können, das gilt speziell für die Ausführungsformen TCXO und OCXO. Daher müssen die dimensionierten Frequenzen beider Oszillatoren in einem festen bekannten Verhältnis zueinander stehen.

An dieser Stelle greift jetzt der besondere Trick der Erfindung, welcher zu dem überraschenden Ergebnis führt, dass die Registerkette eine sehr exakte Verzögerung bewirkt:
Mittels eines Controllers - Mikrocontroller, DSP oder FPGA - wird jetzt am Eingang (VarDly) des Verzögerungselements (VDLY1) die Verzögerungszeit im Verhältnis zum Rahmentakt verändert. Diese Veränderung kann in einer bevorzugten Ausführungsform gemäß Unteranspruch 2 zunächst in groben und dann in feinen Schritten im Rahmen einer Binärsuche erfolgen.

Denn wird der Zeitpunkt des Takts am Eingang von DFF 1 überschritten, dann wird das Antwortsignal des Transponders gleich um eine ganze Taktperiode verzögert. Diese Verzögerung ist so groß, dass sie bei der Auswertung des Messergebnisses (MRes) durch den Controller sofort auffällt und der Algorithmus zur Suche die Information erhält, dass der Taktzeitpunkt überschritten wurde.

Demnach ist klar, dass der Taktzeitpunkt vor dieser in diesem Schritt eingestellten Verzögerung liegen muss, andernfalls - ohne Auftreten dieser Verzögerung um eine Taktperiode - eindeutig danach. Demzufolge kann der Suchbereich für den optimalen Verzögerungswert sofort halbiert werden.

Ähnlich einem A/D Wandler mit sukzessiver Approximation wird daher ein Bereich von 2 hoch n Verzögerungswerten in lediglich n Schritten vollständig erschlossen. Somit wird innerhalb kürzester Zeit jene Verzögerungszeit gefunden, bei der das Abfragesignal in der Registerkette minimal verzögert wird, nämlich im Beispiel um drei quarzgenaue Zyklen des OSC4.

Da bereits handelsübliche günstige TCXO Quarzoszillatoren eine Genauigkeit von kleiner 1E-6 aufweisen, wird so selbst bei einer Verzögerung im Mikrosekunden-Bereich eine Genauigkeit im Picosekunden-Bereich gewährleistet, wie für eine Laufzeitmessung auf kurzer Distanz notwendig. Es kann zudem eine Langzeit-Synchronisation der Frequenz von Oszillator (OSC2) mit Oszillator (OSC4) problemlos durch eine Frequenzregelschleife vorgenommen werden, welche die Frequenz gegen die Periode der eingehenden Pulse nach Schmitt-Trigger (ST1) vergleicht, die TCXO verfügen hierzu über einen Regeleingang.

Man kann nun argumentieren, dass in dieser Anordnung das D-Flip-Flop (DFF1) direkt in einen metastabilen Zustand getrieben wird, hierfür sind allerdings besonders geeignete Schaltungen verfügbar, um dies zu vermeiden. Es wird dafür dieselbe Schaltungstechnik verwendet, wie sie in Phasen-Frequenz-Detektoren von Phasenregelschleifen (PLL) genutzt wird, die ebenfalls Genauigkeiten im Pikosekundenbereich benötigen und mit diesem Problem zu kämpfen haben, das Problem ist nach dem Stand der Technik im Bereich der PLL gelöst.

Sofern sich jetzt der zu messende Abstand verändert, braucht ggf. gar nicht mehr die komplette Binärsuche durchgeführt werden, vielmehr kann eine inkrementale Anpassung der Verzögerung in kleinen Schritten erfolgen.

Sofern die gemäß Unteranspruch 3 bevorzugte Ausführung genutzt wird, dass der Transponder lediglich auf ein bestimmtes Pulsmuster reagiert, indem weitere logische Verknüpfungen in der Registerkette eingefügt werden, so können mehrere unterschiedliche Transponder gleichzeitig im System genutzt werden, von denen je nach Anfragesignal jeweils nur einer antwortet. Dazu muss MF1 in der Abfrageeinheit dieses Muster allerdings erzeugen und das Muster sollte bestimmte Eigenschaften zu einer sicheren Erkennung ausweisen, z.B. mittels Pre-Emphasis verlagerte Flanken der dem ersten Übergang zur Zeitmessung folgenden Übergänge zur Identifikation.

In einer besonders bevorzugten Ausführungsform wird man das erwartete Muster programmierbar machen, z.B. durch einen Controller im Transponder, welcher die Logik der Registerkette ansteuert und dabei das gewünschte Muster auswählt - z.B. mittels ROM oder RAM -, wobei die Auswahl dynamisch aus der Systemkonfiguration festgelegt werden kann. Denkbar ist auch der Einsatz rückgekoppelter Schieberegister und anderer Ansätze aus der Codierungstheorie.

Alternative möglich ist auch der Einsatz von analogen Sample/Hold Stufen in der Registerkette oder von einer CCD-Kette, auch in Kombination mit digitalen Elementen, um die Problematik eines unklaren Schwellwerts bei schwachen Signalen von ST1 zu umgehen. Denkbar ist auch das Triggern eines Analog/Digital-Wandlers als analoges Register mit nachfolgender digitaler Signalverarbeitung, um z.B. eine gestörte Wellenfront verarbeiten zu können.

Mit mehreren Abfragestationen kann zudem eine vollständige Bestimmung der Position des Transponders im Raum vorgenommen werden, die entsprechenden Berechnungen sind unter dem Begriff der Triangulation bekannt.

Denkbar ist natürlich auch der Einsatz von schnell schaltbaren Lichtquellen und Lichtempfängern anstelle der Funkübertragung, theoretisch ist die Erfindung auch für Ultraschallsysteme nutzbar, um die Genauigkeit zu erhöhen.

Mit der Erfindung wird die Möglichkeit geschaffen, auch kurze Entfernungen im Raum mittels Funk zuverlässig auszumessen, so wie dies bisher schon für größere Entfernungen mittels RADAR oder Satellitennavigation möglich ist.

Zur Implementierung des Systems besteht das Problem, diese möglichst technisch stabil und kostengünstig vorzunehmen.

Das Problem wird erfindungsgemäß durch die in den Ansprüchen 4 bis 6 beschriebenen Varianten gelöst, deren Funktion im folgenden anhand eines Ausführungsbeispiels erläutert wird:

Das Beispiel in Bild 1 zeigt wieder das erfindungsgemäße System.

Zunächst erzeugt der Oszillator (OSC1) ein hochfrequentes Trägersignal vorzugsweise im Mikrowellen- oder Millimeterwellen-Band, das über den Pulsmodulator (PM1) moduliert und nach Verstärkung über den Leistungsverstärker PA1 über die Antenne ANT1 als Abfragesignal abgestrahlt werden kann.

Erfindungsgemäß wird jetzt ein besonders schneller Pulsmodulator (PM1) eingesetzt, wodurch sich ein breitbandiges oder Ultra Wide Band Signal ergibt. Damit wird die Auswirkung der Cramer Rao Schranke auf die Systemgenauigkeit reduziert.

Um zu verhindern, dass das von der Antenne (ANT3) ausgestrahlte Signal sofort fälschlicherweise eine weitere Abfrage auslöst, wird jetzt der Empfänger (DET1) kurz vor bis kurz nach der Aussendung gesperrt, dies kann durch Vorabableitung des Sperrsignals beim D-Flip-Flop (DFF2) und Veroderung desselbigen mit den Ausgangssignalen der D-Flip-Flops (DFF3 bis DFF4) geschehen. Alternativ setzt der Ausgang vom D-Flip-Flop (DFF4) die gesamte Registerkette zurück.

Um den Eingang des Signals beim Empfänger (DET1) besonders genau zu ermitteln, ist die Nutzung eines Korrelationsempfängers denkbar, wobei die Auswirkung von Multipath auf die Korrelation nachträglich durch Auswertung der vom A/D-Wandler (DSO-ADC1) empfangenen Flanke reduziert werden kann. Diese Korrekturmöglichkeit besteht selbst bei einfachen Pulssignalen.

Als Empfänger wie auch als Korrelationsempfänger ist die Nutzung eines handelsüblichen I/Q Quadraturdemodulators ebenso wie eines handelsüblichen Breitbanddetektors denkbar. Es kann bei Letzterem ein eventuell zusätzlich vorhandenes RMS Signal in Relation zum empfangenen Envelope gesetzt werden.

Bei Nutzung eines I/Q Quadraturdemodulators bietet sich die Quadrierung und nachfolgende Summierung der I/Q-Ausgänge an, dies kann direkt mittels analoger Multiplizierer oder auch per digitaler Signalverarbeitung, dort bevorzugt mittels CORDIC Algorithmus erfolgen. Die zusätzlich gewonnene Phaseninformation kann zur Erkennung eines stabilen Trägers und ggf. Korrelation mit diesem genutzt werden. Außerdem kann trotz Auslösung einer ersten Pulsbearbeitung in der Registerkette (DFF1 bis DFF4) nachträglich die Aussendung einer Antwort unterdrückt werden, sollte der empfangene Träger nicht hinreichend stabil sein.

Als erstes Register (DFF1) kann durchaus bei Nutzung eines I/Q Quadraturdemodulators wie auch Breitbanddetektors auch das analoge Sample/Hold-Register eines dem Demodulator oder Detektor nachgeschalteten A/D-Wandlers genutzt werden.

Weiterhin kann die Pulsbearbeitung unterdrückt werden, sollte nicht der dem Transponder zugehörige Abfragecode als Modulation auf dem Träger erkannt werden, bei Nutzung eines I/Q Quadraturdemodulators ist eine Phasenmodulation besonders vorteilhaft.

Die korrekte Ansteuerung des A/D-Wandlers zur Auswertung der Antwort ist für eine hohe Systemgenauigkeit besonders wichtig. Einerseits bestimmt dieser die genaue Signallaufzeit, wobei die Genauigkeit durch Interpolation oder Fitting erhöht werden kann.

Andererseits kann er dazu genutzt werden, um aufgrund des symmetrischen Übertragungswegs aus der eingehenden Flanke inklusive aller Störungen durch Multipath eine Korrektur der gemessenen Laufzeit in Senderichtung vorzunehmen. Dazu wird die gemessene Flanke gegen das Verhalten und insbesondere die Triggerschwelle des Empfängers im Transponder rechnerisch verglichen, anhand des Vergleichs kann die Triggerschwelle rechnerisch verschoben und so eine Zeitkorrektur vorgenommen werden.

Dazu muss allerdings ein zum Trigger der Aufzeichnung synchroner Takt für den Wandler bereitgestellt werden. Während derartige Wandler einschließlich FIFO handelsüblich verfügbar sind - z.B. AD6641 von Analog Devices - braucht es für die Verschiebung der Taktflanken einen weiteren Kunstgriff.

Gemäß Unteransprüchen wird dies entweder durch Anwendung eines zweiten gleichartigen Verzögerungselements analog zu dem für den Trigger (VDLY1) erreicht oder durch Gewinnung des Rahmentakts für den Modulator (PM1) nachträglich durch Teilung des Takts für den A/D-Wandler. Zusätzlich können hier PLL Schleifen oder die digitale direkte Synthese zum Einsatz kommen, um eine Taktverschiebung zu erreichen. Umgekehrt kann auch die Taktverschiebung genutzt werden, um einen Träger selber oder den Referenztakt der PLL zu dessen Erzeugung oder den Takt für den D/A-Wandler zur Pulsformung phasengenau anzupassen, um die Genauigkeit weiter zu erhöhen.

Bei Nutzung von Vektormodulatoren - auch für die Pulserzeugung - und Vektordemodulatoren bietet sich die zusätzliche Implementierung eines etablierten Funkstandards an. Die Distanzmessfunktion kann z.B. durch Auswertung des Paketstarts oder eines anderen Merkmals wie z.B. einer Präambel ausgelöst werden. Dabei kann der Inhalt des Datenpakets die Transponderantwort freischalten.

Die nötigen Verzögerungselemente (VDLY1) lassen sich entweder taktbasiert oder auch, so die entsprechende Verarbeitungskapazität bereitsteht, durch Interpolation, insbesondere eines I/Q-Signals für den Vektormodulator, oder durch Resampling in digitaler Signalverarbeitung realisieren. Denkbar ist auch eine Kombination mit der taktbasierten Verzögerung.

Ggf. kann auch eine Vorverzerrung entsprechend bekannter Multipath Eigenschaften vorgenommen werden, welche entweder aus vorangegangenen Transponderantworten oder z.B. aus der Channel Equalization errechnet wird, besonders wenn weitere Funkstandards zum Ansatz kommen.

Somit lässt sich z.B. ein herkömmliches WLAN, LTE oder Bluetooth System durch Ergänzung von wenig zusätzlicher Hardware zur äußerst präzisen Distanzbestimmung nutzen. Damit wird dem Kosten-/Nutzen-Aspekt besonders Rechnung getragen.

Mit der Erfindung wird somit auch die Möglichkeit geschaffen, auch kurze Entfernungen im Raum mittels Funk besonders kostengünstig auszumessen.

Die Erfindung stellt weiterhin zusätzlich einen neuartigen Detektor für Chirp-Impulse mit kurzer Latenzzeit und hoher zeitlicher Präzision bereit, welcher genutzt werden kann, falls das vorbeschriebene System mit Chirp-Impulsen realisiert werden soll, was bezüglich der Ausnutzung der verfügbaren Frequenzen unter Berücksichtigung der Cramer Rao Schranke und der Mehrwegeausbreitung - Multipath - deutliche Vorteile aufweisen kann.

Der Erfindung liegt daher auch die Aufgabe zugrunde, einen Detektor für Chirp-Impulse zur Verwendung in einem Messsystem zu konstruieren, welches die Entfernung zwischen einem beweglichen Objekt und jedenfalls einer ortsfesten Messstation mittels eines Funksignals präzise bestimmt.

Bei Chirp-Impulsen handelt es sich hier um Hochfrequenzimpulse, deren Frequenz während der Pulsdauer kontinuierlich - zumeist linear - steigt oder fällt. Sie folgen demzufolge beispielsweise einer Funktion

$$A(t) = \sin\left(2\pi\left(f_0 + k\,t\right)\right)$$

mit der Grundfrequenz $f_0$ und einer zeitabhängigen Frequenzvariation k t.

Derartige Chirp-Impulse werden beispielsweise in Radar-Systemen mit Pulskompression verwendet. Ein gängiges Verfahren zur Detektion besteht in der Nutzung eines Filters, speziell SAW Filters, mit frequenzabhängiger Gruppenlaufzeit. Hierbei wird bei Vorliegen z.B. eines Chirp-Impulses mit anfänglich niedriger und dann linear steigender Frequenz für niedrige Frequenzen im Passband eine höhere Gruppenlaufzeit als für höhere Frequenzen im Filter vorgesehen, die Differenz zwischen kleinster und größter Gruppenlaufzeit im Passband sollte dann ungefähr der Pulsdauer entsprechen. Somit kommen alle Signalanteile am Filterausgang gleichzeitig an und addieren sich bei richtiger Auslegung zu einem großen kurzen Gesamtpeak, der leicht z.B. mittels eines schnellen Diodendetektors zu erkennen ist. Für Details zum Stand der Technik siehe beispielhaft US5298962A.

Bei der Anwendung von Chirp-Impulsen in einem Radar mit Pulskompression versteht sich von selber, dass die Impulse zeitlich begrenzt sind. Zunächst steigt z.B. die Amplitude bei z.B. der kleinsten Frequenz an, danach ändert sich die Frequenz bis zur größten Frequenz, woraufhin die Amplitude wieder abgesenkt wird. Zur Verdeutlichung siehe hierzu das in Bild 2 im zeitlichen Verlauf dargestellte Eingangssignal an der Antenne (ANT1).

In der Bauart eines FMCW Radar Systems finden ebenfalls Chirp Signale Verwendung, die hier aber kontinuierlich - CW - als linear ansteigende und sodann wieder linear abfallende Frequenz ausgestrahlt werden, durch Mischung des Empfangssignals mit dem Sendesignal und Zuordnung zum steigenden bzw. fallenden Anteil kann unmittelbar der Abstand des Objekts und der Doppler-Versatz der Frequenz bei bewegten Objekten bestimmt werden, vergleiche US4106020A.

Eine weitere Möglichkeit zur Detektion im Vergleich zum o.g. Pulskompressionsfilter findet sich in der Vektordemodulation des empfangenen Impulses mittels eines I/Q Quadraturdemodulators, auch Vektordemodulator genannt. Dieser besteht aus zwei Mischern, welche mit dem gleichen, jedoch bei einem Mischer um 90 Grad phasenversetzten Lokaloszillatorsignal gespeist werden. Am Ausgang erhält man hier das übliche analytische - in der komplexen Zahlenebene leicht zu rechnende - Signal.

Nach dem heutigen Stand der Technik wird dieses Signal meist unmittelbar nach vergleichsweise grober Tiefpassfilterung zwecks Einhaltung des Nyquist Kriteriums und Analog/Digital-Wandlung der digitalen Signalverarbeitung zugeführt und dort z.B. eine Korrelation vorgenommen. Beispielhaft hierfür seien EP1490708B1 und EP0472024A2 jeweils im Zusammenhang mit Radarsystemen angeführt.

Ein Nachteil der digitalen Signalverarbeitung ist allerdings die hohe Latenzzeit des Detektors bedingt durch die Wandler sowie Rechenprozesse und die Quantisierung des Abtasttakts, welche ggf. eine aufwendige Zusatzverarbeitung zur Bestimmung des exakten Zeitpunkts des Pulseingangs nötig macht. Hinzu kommt der hohe Stromverbrauch der breitbandigen Analog/Digital-Wandler bei einer hohen Bandbreite des Chirp-Signals.

Es gibt daher auch analoge Ansätze mit I/Q Quadraturdemodulatoren, beispielhaft sei US4333080A angeführt. Nachteilig ist hier allerdings erneut die hohe und vor allem unbestimmte Latenzzeit durch die Nutzung einer Verzögerungsleitung, welche im analogen Fall inhärent mit Ungenauigkeiten behaftet ist.

Zur Implementierung des im ersten Teil beschriebenen Systems ist die Verwendung von Chirp-Pulsen grundsätzlich wünschenswert, allerdings besteht beim Stand der Technik das Problem, dass sämtliche Implementierungen eines Chirp-Detektors an den vorgenannten Problemen leiden, welche gerade bei kurzen Signallaufzeiten im Nahdistanzbereich eine Nutzung erschweren oder verhindern. Insbesondere muss die Relation der Verarbeitungsdauer zur Signallaufzeit gewahrt bleiben.

Das Problem wird erfindungsgemäß durch das in den Ansprüchen 7 bis 13 beschriebene System gelöst, dessen Funktion im folgenden anhand eines Ausführungsbeispiels erläutert wird:

Das Beispiel in Bild 2 zeigt ein erfindungsgemäßes System. Der eingehende Chirp-Puls wird zunächst von der Antenne (ANT5) aufgenommen, im Verstärker (LNA3) auf einen akzeptablen Signalpegel gebracht und dann dem I/Q Quadraturdemodulator (IQDEM1) zugeführt.

Dieser besteht aus den beiden Mischern (MX1 und MX2), deren Konversionsverlust durch zwei nachfolgende Verstärker (AMP1 und AMP2) ausgeglichen wird, sowie aus einem Phasensplitter (SP1), welcher das vom Lokaloszillator (LO1) bereitgestellte Signal in einer jeweils um +45 Grad bzw. -45 Grad verschobenen Version den beiden Mischern zur Frequenzumsetzung zukommen lässt. Die Mischer erzeugen sodann Summen- und Differenzfrequenzen, wobei im Folgenden nur die Differenzfrequenzen von Belang sind. In den den gängigen Quadraturdemodulatoren werden die hohen Summenfrequenzen zumeist bauartbedingt durch die beschränkte Bandbreite der I und Q Ausgangstreiber oder durch zusätzliche Tiefpassfilter (LP3 und LP4) entfernt.

Eine andere Möglichkeit besteht in der Nutzung eines Lokaloszillators mit doppelter Frequenz wie der Chirp Mittenfrequenz und Einsatz eines phasenschiebenden Frequenzteilers als SP1, welcher sowohl die positive als auch die negative Flanke des Eingangssignals auswertet. Ebenfalls bekannt sind integrierte Schaltungen, welche die Lokaloszillatorfrequenz zunächst verdreifachen und danach wie vorbezeichnet teilen. Im folgenden soll mit Lokaloszillatorfrequenz aber immer jene innere an den Mischern (MX1, MX2) des Quadraturdemodulators anliegende Frequenz bezeichnet sein, bei der ein Eingangssignal seinerseits I und Q Ausgangssignale des Quadraturdemodulators mit 0Hz - also Gleichspannungen abhängig von der Phasenrelation - erzeugt.

In der gemäß Unteranspruch bevorzugten Implementierung wird jetzt das eine I-Ausgangssignal des I/Q Quadraturdemodulators einem phasenschiebendem Hochpassfilter (HP1) und das andere Q-Ausgangssignal einem phasenschiebendem Tiefpassfilter (LP1) zugeführt. Die Summe der Phasenverschiebung beider Filter in Relation zueinander beträgt ca. 90 Grad.

Die entsprechende Summen-Phasenverschiebung lässt sich leicht durch Einsatz von zwei R/C-Filtern erster Ordnung erreichen, bei denen die insgesamte Phasenverschiebung von 90 Grad bei gleicher 3dB Grenzfrequenz inhärent gegeben ist. Techniken zur Integration dieser sind u.a. aus der Implementierung von Splitternetzwerken - ähnlich dem im I/Q Quadraturdemodulator genutzten Splitter (SP1) - bekannt.

Sodann werden beide Signalpfade durch einen Multiplizierer (MUL1) zusammengeführt, dessen Ausgang jetzt überraschenderweise ein sehr genaues Signal zur Detektion des Chirp-Pulses zeitnah zur Verfügung stellt.

Denn durch die zusätzliche Phasenverschiebung der Ausgänge befinden sich beide Ausgangssignale des I/Q Quadraturdemodulators in Phase, so sich die Frequenz des Chirp Signals unterhalb der Frequenz des Lokaloszillators befindet, und exakt 180 Grad außer Phase, wenn die Frequenz des Chirp Signals oberhalb der Frequenz des Lokaloszillators liegt.

Bei Übereinstimmung beider Frequenzen kommt es zur Ausgabe eines Gleichspannungssignals, welches hier durch den Hochpassfilter eleminiert wird und zu einem Null-Produkt führt. Ebenso werden Störsignale außerhalb des Passbands durch den Tiefpassfilter entfernt.

In einer besonders bevorzugten Ausführung der Erfindung wird zudem ein zweiter gleichartiger Pfad mit einem weiteren Multiplizierer (MUL2) realisiert, der über Kreuz mit dem ersten geschaltet aus je einem weiteren phasenschiebenden Hochpassfilter (HP2) wie Tiefpassfilter (LP2) ein weiteres Detektionssignal ableitet, welches in Summe mit einem Phasenversatz von 90 Grad gegenüber dem ersten Detektionssignal erzeugt wird.

Durch die Zusammenführung dieses im Ergebnis negierten und um 90 Grad phasenverschobenen zweiten Detektionssignals mit dem ersten Detektionssignal vorzugsweise durch Subtraktion, wozu je nach Vorzeichenlage insbesondere bei symmetrischen Signalausgängen der Bauteile auch ein Addierer genutzt werden kann, werden die Lücken im Detektionssignal, welche durch die effektive Quadrierung der I/Q-Signale entstehen, durch das jeweils andere Detektionssignal gefüllt.

Hierdurch ergibt sich in Summe - bedingt durch die in den Multiplizierern ausgeführte Quadrierung - eine geometrische Addition und daher ein Gesamt-Detektionssignal hoher Qualität. Die nötigen Addierer sind zumeist auf gängigen analogen Multiplizierer-Bausteinen mit integriert.

Somit liegt überraschenderweise durch die erfindungsgemäße Anordnung ein Detektionssignal mit äußerst geringer Latenz und sehr hoher zeitlicher Präzision vor.

Das so summierte Ausgangssignal kann optional noch mit einem Tiefpass (LP5) gefiltert werden, um die Welligkeit durch bauteilbedingte Abweichungen infolge Toleranzen von der geometrischen Summe zu reduzieren. Hierbei sollte aber eine eher hohe Grenzfrequenz und möglichst kleine Gruppenlaufzeit zum Ansatz kommen, um die grundsätzlich hohe zeitliche Genauigkeit des Nulldurchgangs nicht durch z.B. temperaturabhängig schwankende Gruppenlaufzeiten einfacher Filter negativ zu beeinflussen.

Der erfindungsgemäße Detektor erzeugt somit ein Ausgangssignal, welches - siehe Bild 2, Diagramm am Signal DetOut - beim Eintreffen eines Chirp-Pulses zunächst auf einen Wert oberhalb der Nulllinie ansteigt, dann diese exakt bei Übereinstimmung der Chirp-Frequenz mit der Lokaloszillatorfrequenz schneidet und danach fast symmetrisch auf der Unterseite der Nulllinie ausschlägt, um zum Pulsende hin zu dieser zurückzukehren.

Mit einer geeigneten Zusatzschaltung bestehend aus einem Komparator (CMP2) und einem Flip-Flop (DFF1) lässt sich somit hieraus abgeleitet ein zeitlich sehr genaues digitales Detektionssignal gewinnen.

Dieses kann, wie in Bild 3 dargestellt, in einer besonders vorteilhaften Ausführung der Erfindung, auch bezüglich der insgesamten Signalform auf Konformität bewertet werden, um das Ansprechen auf fremde Störsignale weitgehend zu verhindern.

Im vorliegenden Beispiel wird hierzu die Überschreitung des positiven Schwellwerts mittels dem Komparator (CMP1) detektiert und mittels eines Verzögerungselements (DLY1), welches auch ein einfaches R/C-Glied mit folgendem Schmitt-Trigger sein kann, auf den Zeitpunkt des durch den Komparator (CMP2) detektierten Nulldurchgangs verzögert. Das D-Flip-Flop (DFF5) wird daher genau dann gesetzt, wenn sowohl vorab die Überschreitung des positiven Schwellwerts als auch der Nulldurchgang vorgelegen hat. Der Setzvorgang erfolgt zudem exakt zum Nulldurchgang.

In einem weiteren Schritt wird jetzt nach Vorliegen der vorgenannten Bedingungen zusätzlich das D-Flip-Flop (DFF6) gesetzt, wenn der negative Schwellwert, detektiert durch den Komparator (CMP3), überschritten wurde. Somit steht ein Maskensignal für weitere Verarbeitungsschritte bereit.

Das zeitliche Auftreten des Nulldurchgangs im Verhältnis zu einem Referenztakt - vergleiche der Registertakt im Transponder aus DE102015013453 - wird jetzt sehr exakt durch das D-Flip-Flop (DFF7) bestimmt. Der so erkannte Nulldurchgang wird aber nur dann in einem weiteren Schritt von dem weiteren D-Flip-Flop (DFF8) übernommen, wenn auch das Vorhandensein des negativen Anteils durch eben das von D-Flip-Flop (DFF6) bereitgestellte Maskensignal bestätigt und so mittels UND-Gatter (AND1) das Gesamtsignal zur weiteren Übernahme freigegeben wird.

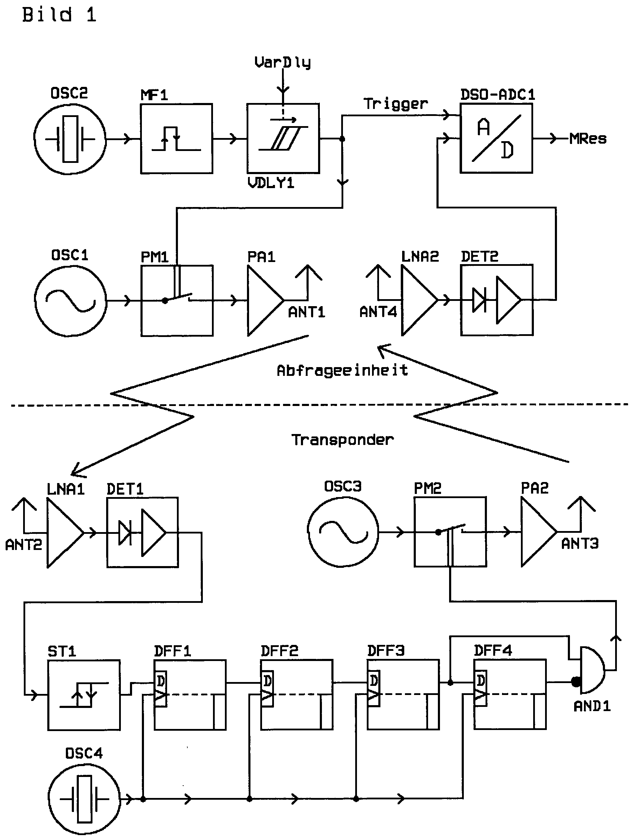

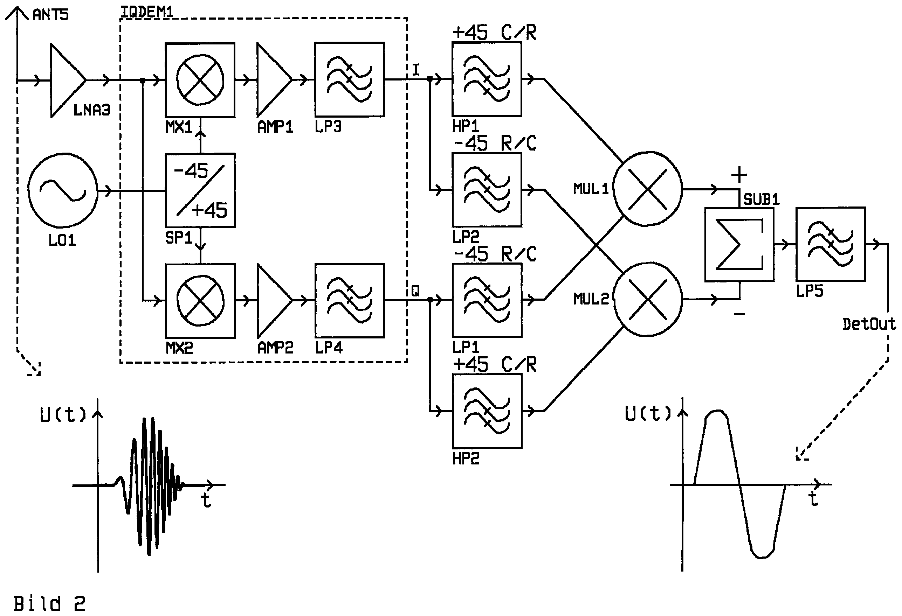

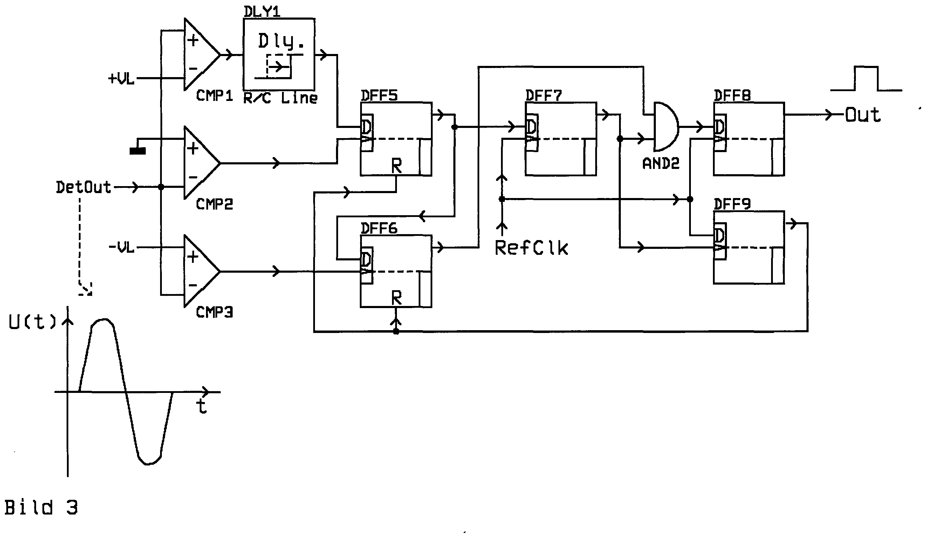

Unabhängig davon erfolgt im schemahaften Beispiel in Abbildung 2 das Rückstellen der Flip-Flops mit der Übernahme des erkannten Nulldurchgangs durch das D-Flip-Flop (DFF9) mit einem Takt Verzögerung, wodurch die Registerkette in jedem Fall auch nach lediglich partiell erkannten Impulsen zurückgesetzt wird. Selbstverständlich steht es dem Fachmann an dieser Stelle frei, weitere Kriterien und Timeouts für die Erkennung, Maskierung und Rücksetzung in einer realen Implementierung einzuführen, um die Stabilität und Qualität der Auswertung zu erhöhen.

Zur weiteren Steigerung der Qualität der Erkennung bietet sich an, die Schwellwerte der Komparatoren (CMP1 und CMP3) adaptiv festzulegen, hierbei kann man sich z.B. am Rauschpegel der I- und Q-Ausgänge des Quadarturdemodulators ohne anliegenden Puls orientieren.

Eine weitere Möglichkeit ist der Einsatz schnell abtastender (S/H) Analog-Digital-Wandler, die insgesamt sogar keine besonders hohe Datenrate aufweisen brauchen, und die digitale Auswertung der Signalform ggf. unabhängig von der zeitlich sehr exakten Auswertung des Nulldurchgangs. Da hier eine nachträgliche Maskierung möglich ist, steht für die digitale Signalverarbeitung genügend Zeit zur Verfügung, sodass z.B. auch die Korrelation mit einem Muster-Impuls denkbar ist.

Somit wird zum Zeitpunkt des Vorliegens einer Referenztaktflanke am Takteingang des D-Flip-Flops (DFF7) sehr genau entschieden, ob ein systemkonformer Chirp-Impuls exakt vor oder nach der Flanke eingetroffen ist, ganz wie dies für Laufzeitmessung in DE102015013453 benötigt wird. Bei diesem Flip-Flop ist konstruktiv unbedingt darauf zu achten, dass insgesamt keine metastabilen Zustände auftreten können.

Eine weitere zusätzliche Nutzungsmöglichkeit des Detektors besteht darin, nicht nur Chirp-Impulse mit steigender, sondern auch solche mit fallender Frequenz im Zeitverlauf zuzulassen, um mit der Richtung des Signaldurchgangs des Detektionssignals z.B. Steuerinformationen für die Transponder zu diesem hin oder umgekehrt Quittungsinformationen oder gemessene Messwerte zur Abfrageeinheit zurück zu übertragen. Dies kann im vorliegenden Fall durch Auswertung der Richtung des Nulldurchgangs geschehen. Hierzu braucht bei Nutzung der Logik aus Abbildung 2 lediglich die dort dargestellte Logik nach den Komparatoren verdoppelt werden, für die zweite Instanz werden dann die Ausgänge der Komparatoren (CMP1 und CMP3) vertauscht und das Signal des Komparators (CMP2) invertiert. Denkbar ist auch die separate Auswertung mittels zweier SAW Pulskompressionsfilter wie nach dem Stand der Technik bekannt.

Eine weitere Nutzungsmöglichkeit mit Pulsen sowohl steigender als auch fallender Frequenz besteht in der Auswertung der Differenz zur Ermittlung des Doppler-Einflusses und somit einer Bestimmung der Geschwindigkeit des ggf. bewegten Transponders.

Die Erfindung stellt somit auch einen hochgenauen Detektor bereit, um Distanzbestimmungen mittels Funksignalen im Nahbereich oder innerhalb geschlossener Räume mittels Chirp-Pulsen mit hoher Präzision zu ermöglichen.

**Patentansprüche**

1. System zur Positionsbestimmung oder Entfernungsmessung durch Laufzeitmessung, das System bestehend aus mindestens einer Abfrageeinheit und mindestens einem Transponder, wobei die Abfrageeinheit ein Abfragesignal mittels Funk, Schall oder Licht zum Transponder aussendet, welches von diesem mit einem Antwortsignal ebenfalls mittels Funk, Schall oder Licht beantwortet wird, das seinerseits von der Abfrageeinheit empfangen wird, wodurch die Zeit zwischen Abfrage und Antwort bestimmt und daraus die Entfernung zwischen Abfrageeinheit und Transponder errechnet wird, der Transponder umfasst einen Detektor zum Erfassen des Abfragesignals, die Abfrageeinheit umfasst einen Detektor zum Erfassen des Antwortsignals, **dadurch gekennzeichnet, dass**

   1 die Abfrageeinheit die Abfragen zunächst mittels eines präzisen oder Quarz-Taktgebers (OSC2) in einem festen Zeitraster intern erzeugt oder anlegt, wobei in diesem Raster auch einzelne Abfragen ausgelassen werden dürfen,
   2 die Abfrageeinheit über mindestens ein variables Verzögerungselement (VDLY1) für die so erzeugten Abfragen verfügt, welches es ermöglicht, das zunächst dem Zeitraster gehorchende Abfragesignal variabel (VarDly) zeitlich im Raster zu verschieben und danach auszusenden,
   3 der Transponder die sodann empfangenen und vom Detektor detektierten Abfragen in mindestens einer getakteten Registerkette (DFF1-DFF4), bestehend aus mindestens einem getaktetem digitalem oder analogen Register - die optionalen Bauformen D-Flip-Flop, Sample/Hold, Charge-Coupled-Device - CCD - und Analog/Digital-Wandler - ADC - eingeschlossen - verzögert und mit dem so verzögerten Signal die Antwort auslöst,
   4 diese Registerkette im Transponder von einem präzisen oder Quarz-Taktgeber (OSC4) aus einem lokalen Registertakt getaktet wird, welcher in fester Frequenz-Relation zum Zeitraster der Abfrageeinheit steht, aber nicht phasensynchron sein muss,
   5 mit Hilfe des variablen Verzögerungselements (VDLY1) in der Abfrageeinheit durch schrittweise veränderte Einstellung der Verzögerung (VarDly) seitens eines Controllers der Abfrageeinheit jener Zeitpunkt bestimmt wird, an dem gerade eben durch ein Taktsignal im Transponder eine sofortige Übernahme in der Registerkette exakt bei einer Taktflanke des Registertakts erfolgt, wohingegen bei geringfügiger zusätzlicher Verzögerung ein Zeitsprung von jedenfalls einer weiteren Registertaktperiode des empfangenen Antwortsignals entsteht,

   6 zu jener Einstellung der Verzögerung, welche eine sofortige Übernahme der Abfrage in der Registerkette exakt bei einer Taktflanke des Registertakts bewirkt, mindestens eine hochpräzise Messung der Signallaufzeit vorgenommen wird.

2. System nach Anspruch 1, **dadurch gekennzeichnet, dass** das Bestimmen des Zeitpunkts der Übernahme bei einer Taktflanke durch eine binäre Suche der anzuwendenden Einstellung der Verzögerung (VarDly) innerhalb eines definierten Zeitintervalls vorgenommen wird, wobei nach erfolgter Ermittlung einer ersten Verzögerungszeit nachfolgend eine inkrementelle Suche - Tracking - zur Ermittlung nur noch geringer Unterschiede zur Verzögerung an der Taktflanke infolge Veränderung der Laufzeiten genutzt werden kann.

3. System nach einem der Ansprüche 1 oder 2, **dadurch gekennzeichnet, dass** die Registerkette in Kombination mit Logikgattern nur auf ein bestimmtes Abfragemuster hin ein Antwortsignal erzeugt, wobei unterschiedliche Transponder durch unterschiedliche Kombinationen der - wahlweise auch programmierbaren - Logik auf unterschiedliche Abfragemuster reagieren können.

4. System nach einem der Ansprüche 1 bis 3, **dadurch gekennzeichnet, dass** breitbandige, breitbandig gepulste, OFDM oder Ultra Wideband Funksignale genutzt werden.

5. System nach einem der Ansprüche 1 bis 4, **dadurch gekennzeichnet, dass** zur präzisen Erfassung des Antwortsignals in der Abfrageeinheit ein Takt eines die Antwort aufzeichnenden ADC Wandlers (DSO-ADC1) zusammen mit einem Triggersignal des ADC Wandlers über ein weiteres variables Verzögerungselement, welches baugleich zum vorhandenen Verzögerungselement (VDLY1) ist und gleichartig angesteuert wird, mit verzögert wird.

6. System nach einem der Ansprüche 1 bis 5, **dadurch gekennzeichnet, dass** eine Integration in ein bestehendes Standard-Datenübertragungssystem wie IEEE WLAN, ETSI LTE oder Bluetooth vorgenommen wird, indem eine Signalcharakteristik oder der Paketanfang als Abfrage- oder Antwortpuls interpretiert wird.

7. Detektor für Chirp-Impulse, für ein System zur Positionsbestimmung oder Entfernungsmessung durch Laufzeitmessung gemäß Anspruch 1 oder 2, bestehend aus mindestens einem, von mindestens einem Lokaloszillator (LO1) gespeisten I/Q Quadraturdemodulator (IQDEM1) mit nachgeschalteter Auswerteschaltung - wobei im Folgenden immer die innere lokal an den Mischern (MX1, MX2) des Quadraturdemodulators bereitgestellte Frequenz als Lokaloszillatorfrequenz bezeichnet wird, auch dann, wenn die von Außen in das Bauteil eingespeiste Lokaloszillatorfrequenz zuvor intern vervielfacht oder geteilt wird -,

**dadurch gekennzeichnet, dass** in der nachfolgenden Auswerteschaltung zwischen beiden I und Q Ausgängen des Quadraturdemodulators zunächst ein Phasenversatz von ungefähr 90 Grad, zuzüglich eines ganzzahligen - einschließlich der ganzen Zahl Null - Vielfachen von 180 Grad, durch Phasenschieber und/oder Filter (HP1, LP1) herbeigeführt wird und die so phasenverschobenen Ausgänge in mindestens einem Multiplizierer (MUL1, MUL2) oder Mischer zusammengeführt werden, wodurch das Ausgangssignal des Detektors bei Erreichen der Lokaloszillatorfrequenz durch die Chirp Frequenz einen Nulldurchgang aufweist.

8. Detektor für Chirp-Impulse nach Anspruch 7, **dadurch gekennzeichnet, dass** ein Ausgang des Quadraturdemodulators mittels mindestens einem Hochpassfilter (HP1, HP2) phasenverschoben wird, wodurch zusätzlich die Absenkung des Ausgangssignals bei Chirp Frequenzen dicht bei der Lokaloszillatorfrequenz forciert werden kann.

9. Detektor für Chirp-Impulse nach Anspruch 7, **dadurch gekennzeichnet, dass** ein Ausgang des Quadraturdemodulators mittels mindestens einem Tiefpassfilter (LP1, LP2) phasenverschoben wird, wodurch zusätzlich hochfrequente Störfrequenzen außerhalb des Frequenzbereichs des Chirp Pulses unterdrückt werden können.

10. Detektor für Chirp-Impulse nach Anspruch 8 und 9, **dadurch gekennzeichnet, dass** es sich bei den Hoch- und Tiefpassfiltern um R/C Filter erster Ordnung oder R/C Filternetzwerke mit einem sich inhärenten ergebenden Phasenversatz zwischen beiden Pfaden von 90 Grad in Summe handelt.

11. Detektor für Chirp-Impulse nach einem der Ansprüche 8 bis 10 oder einer Kombination dieser, **dadurch gekennzeichnet, dass** symmetrisch jeder I und Q Ausgang des Quadraturdemodulators (IQDEM1) sowohl mindestens einem Hochpassfilter (HP1, HP2) oder ersten Phasenschieber als auch mindestens einem Tiefpassfilter oder zweitem Phasenschieber (LP1, LP2) zugeführt wird, sodann mindestens zwei Multiplizierer (MLTL1, MUL2) oder Mischer jeweils das Signal eines so gefilterten oder phasenverschobenen I Ausgangs über Kreuz mit dem Signal eines so gefilterten oder phasenverschobenen Q Ausgangs multiplizieren und die Ausgangssignale der Multiplizierer oder Mischer zum Erhalt eines Gesamt-Detektionssignals hoher Qualität subtrahiert (SUB1) oder addiert werden.

12. Detektor für Chirp-Impulse nach einem der Ansprüche 8 bis 11 oder einer Kombination dieser, **dadurch gekennzeichnet, dass** die Richtung des Nulldurchgangs des von mindestens einem Multiplizierer (MUL1, MUL2) oder Mischer erzeugten Detektionssignals, welches die Richtung der Frequenzänderung des Chirps beschreibt, als digitales Signal zur zusätzlichen Datenübertragung ausgewertet wird.

13. Detektor für Chirp-Impulse nach einem der Ansprüche 7 bis 12 oder einer Kombination dieser, **dadurch gekennzeichnet, dass** er auf einem integrierten Schaltkreis eines Transponders oder einer Abfrageeinheit eines Systems zur Positionsbestimmung oder Distanzmessung mittels Funk implementiert ist, welches Chirp-Impulse zur Ortung nutzt, optional in Kombination mit einem Pulskompressionsfilter.

14. Abfrageeinheit für ein System zur Positionsbestimmung oder Entfernungsmessung durch Laufzeitmessung als Komponente eines solchen Systems nach Anspruch 1, **dadurch gekennzeichnet, dass** diese Abfrageeinheit mindestens jene Merkmale aus einem der Ansprüche 1 bis 6 aufweist, die dort der Abfrageeinheit zugeschrieben sind.

15. Transponder für ein System zur Positionsbestimmung oder Entfernungsmessung durch Laufzeitmessung als Komponente eines solchen Systems nach Anspruch 1, **dadurch gekennzeichnet, dass** dieser Transponder mindestens jene Merkmale aus einem der Ansprüche 1 bis 6 aufweist, die dort dem Transponder zugeschrieben sind.

**Claims**

1. System for position determination or distance measurement by time-of-flight measurement, the system comprising at least one interrogation unit and at least one transponder, the interrogation unit transmitting an interrogation signal by means of radio, sound or light to the transponder, which is responded to by the transponder with a response signal likewise by means of radio, sound or light, which in turn is received by the interrogation unit, whereby the time between interrogation and response is determined and the distance between interrogation unit and transponder is calculated therefrom, the transponder comprises a detector for detecting the interrogation signal, the interrogation unit comprises a detector for detecting the response signal,
**characterized in that**

1 the interrogation unit first generates or creates the interrogations internally by means of a precise or quartz clock (OSC2) in a fixed time grid, whereby individual interrogations may also be omitted in this grid,

2 the interrogation unit has at least one variable delay element (VDLY1) for the interrogations thus generated, which makes it possible to shift the interrogation signal, which initially obeys the time grid, variably (VarDly) in time in the grid and then to transmit it,

3 the transponder delays the interrogations then received and detected by the detector in at least one clocked register chain (DFF1-DFF4), consisting of at least one clocked digital or analog register - the optional designs D-flip-flop, sample/hold, charge-coupled device - CCD - and analog/digital converter - ADC - included - and triggers the response with the signal thus delayed,

4 this register chai n in the transponder is clocked by a precise or quartz clock generator (OSC4) from a local register clock, which is in fixed frequency relation to the time grid of the interrogation unit, but does not have to be phase synchronous,

5 with the aid of the variable delay element (VDLY1) in the i nterrogati on unit, that point in time is determined on the part of a controller of the interrogation unit by means of a stepwise changed setting of the delay (VarDly) at which an immediate takeover in the register chain takes place exactly at a clock edge of the register clock just by means of a clock signal in the transponder, whereas a time jump of at least one further register clock peri od of the received response signal occurs in the case of a slight additional delay,

6 to that setting of the delay, which causes an immediate takeover of the query in the register chain exactly at a clock edge of the register clock, at least a high-precision measurement of the signal propagati on time is made.

2. System according to claim 1, **characterized in that** the determi nati on of the time of takeover at a clock edge is performed by a binary search of the applicable setting of the delay (VarDly) within a def i ned ti me interval, wherein after a first delay ti me has been determined, an incremental search - tracki ng - can subsequently be used to determi ne only minor differences to the delay at the clock edge as a result of changes in the propagati on ti mes.

3. System according to one of claims 1 or 2, **characterized in that** the register chain in combination with logic gates generates a response signal only in response to a specific interrogation pattern, whereby different transponders can respond to different interrogation patterns by different combi nati ons of the - optionally also programmable - logic.

4. System according to any one of claims 1 to 3, **characterized in that** broadband, broadband pulsed, OFDM or ultra wideband radio signals are used.

5. System according to any one of claims 1 to 4, **characterized in that,** for precise detection of the response signal in the interrogation unit, a clock of an ADC converter (DSO-ADC1) recording the response is co-delayed together with a trigger signal of the ADC converter via a further variable delay element which is identical in construction to the existing delay element (VDLY1) and is driven in the same way.

6. System according to any one of claims 1 to 5, **characterized in that** integration into an existing standard data transmission system such as IEEE WLAN, ETSI LTE or Bluetooth is performed by interpreting a signal characteristic or the start of the packet as an interrogation or response pulse.

7. Detector for chirp pulses, for a system for position determi nati on or distance measurement by time-of-flight measurement according to claim 1 or 2, consisting of at least one I/Q quadrature demodulator (IQDEM1) fed by at least one local oscillator (LO1) with a downstream evaluation circuit - wherein in the following the internal local frequency provided at the mixers (MX1, MX2) of the quadrature demodulator is always referred to as the local oscillator frequency, even if the local oscillator frequency fed into the component from outside is multiplied or divided internally beforehand,

   **characterized in that in** the subsequent evaluation circuit between both I and Q outputs of the quadrature demodulator first a phase shift of about 90 degrees, pl us an integer - including the integer zero - multiple of 180 degrees, is brought about by phase shifters and/or filters (HP1, LP1) and the thus phase-shifted outputs are combined in at least one multiplier (MUL1, MUL2) or mixer, whereby the output signal of the detector has a zero crossi ng when the local oscillator frequency is reached by the chirp frequency.

8. A detector for chirp pulses accordi ng to claim 7, **characterized in that** an output of the quadrature demodulator is phase-shifted by means of at least one high-pass filter (HP1, HP2), whereby additionally the lowering of the output signal at chirp frequencies close to the local oscillator frequency can be forced.

9. A detector for chirp pulses according to claim 7, **characterized in that** an output of the quadrature demodulator is phase-shifted by means of at least one low-pass filter (LP1, LP2), whereby highfrequency interference frequencies outside the frequency range of the chirp pulse can additionally be suppressed.

10. A detector for chirp pulses according to claims 8 and 9, **characterized in that the** high-pass and low-pass filters are first-order R/C filters or R/C filter networks with an inherent resulting phase offset between the two paths of 90 degrees in sum.

11. A detector for chi rp pulses accordi ng to any one of claims 8 to 10 or a combi nati on thereof, **characterized in that** symmetrically each I and Q output of the quadrature demodulator (IQDEM1) is fed to at least one high passfilter (HP1, HP2) or first phase shifter as well as to at least one low passfilter or second phase shifter (LP1, LP2), then at least two multipliers (MUL1, MUL2) or mixers each cross-multiply the signal of an I output thusfiltered or phase-shifted with the signal of a Q output thus filtered or phase-shifted, and the output signals of the multipliers or mixers are subtracted (SUB1) or added to obtain an overall detection signal of high quality.

12. Detector for chirp pulses according to any one of claims 8 to 11 or a combination thereof, **characterized in that** the direction of the zero crossing of the detection signal generated by at least one multiplier (MUL1, MUL2) or mixer, which describes the direction of the frequency change of the chi rp, is eval uated as a di gital signal for additional data transmission.

13. A detector for chi rp pulses accordi ng to any one of claims 7 to 12 or a combi nati on thereof, **characterized in that** it is implemented on an integrated circuit of a transponder or an interrogation unit of a system for position determination or distance measurement by radio which uses chirp pulses for location, optionally in combination with a pulse compression filter.

14. An interrogation unit for a system for position determination or distance measurement by time-of-flight measurement as a component of such asystem according to claim 1, **characterized in that said interrogation** unit comprises at least those features from any of claims 1 to 6 which are there attributed to the i nterrogati on unit.

15. A transponder for a system for position determination or distance measurement by time-of-flight measurement as a component of such a system according to claim 1, **characterized in that** said transponder has at least those features from any of claims 1 to 6 which are ascribed to the transponder therein.

**Revendications**

1. Système de détermi nation de position ou de mesure de distance par mesure du temps de parcours, le système étant constitué d'au moins une unité d'interrogation et d'au moins un transpondeur, l'unité d'interrogation émettant un signal d'interrogation au moyen d'une radio, d'un son ou d'une lumière vers le transpondeur, signal auquel celui-ci répond par un signal de réponse également au moyen d'une radio, d'un son ou d'une lumière, qui est à son tour reçu par l'unité d'interrogation, ce qui permet de déterminer le temps entre l'interrogation et la réponse et d'en calculer la distance entre l'unité d'interrogation et le transpondeur, le transpondeur comprend un détecteur pour détecter le signal d'interrogation, l'unité d'interrogation comprend un détecteur pour détecter le signal de réponse, **caractérisé en ce que**

1 l'unité d'interrogation génère ou crée d'abord les interrogations en interne au moyen d'une horloge précise ou à quartz (OSC2) dans une trame temporel le fixe, certaines interrogations pouvant également être omises dans cette trame,

2 l'unité d'interrogation dispose d'au moins un élément de retard variable (VDLY1) pour les i nterrogati ons ai nsi générées, qui permet de décaler de manière variable (VarDly) dans le temps dans la trame le signal d'interrogation obéissant d'abord à la trame temporelle et de l'émettre ensuite,

3 le transpondeur retarde les interrogations reçues ensuite et détectées par le détecteur dans au moins une chaîne de registres cadencée (DFF1-DFF4), constituée d'au moins un registre numérique ou analogique cadencé - y compris les formes de construction optionnelles D-Flip-Flop, Sample/Hold, Charge-Coupled-Device - CCD - et convertisseur analogique/numérique - ADC - et déclenche la réponse avec le signal ainsi retardé,

4 cette chaîne de régi stres dans le transpondeur est cadencée par une horloge précise ou à quartz (OSC4) à partir d'une horloge de registre locale, qui est en relation de fréquence fixe avec la trame temporelle de l'unité d'i nterrogati on, mais qui ne doit pas être synchrone en phase,

5 à l'aide de l'élément de temporisation variable (VDLY1) dans l'unité d'interrogation, on détermine, par un réglage modifié pas à pas de la temporisation (VarDly) de la part d'un contrôleur de l'unité d'interrogation, le moment où, justement, un signal d'horloge dans le transpondeur permet une pri se en charge i mmédi ate dans la chaîne de régi stres exactement à un flanc d'horloge du signal d'horloge de registre, alors que, en cas de léger retard supplémentaire, il se produit un saut temporel de toute façon d'une autre période d'horloge de registre du signal de

réponse reçu,

au moins une mesure très précise du temps de propagation du signal est effectuée pour le réglage de la temporisation qui entraîne une prise en charge immédiate de l'interrogation dans la chaîne de registres exactement lors d'un front d'horloge de l'horloge de registre.

2. Système selon la revendication 1, **caractérisé en ce que** la détermination du moment de la prise en charge sur un flanc d'horloge est effectuée par une recherche binaire du réglage à appliquer du retard (VarDly) à l'intérieur d'un intervalle de temps défini, une recherche incrémentielle - tracking - pouvant être utilisée par la suite après la détermination d'un premier temps de retard pour déterminer seulement de faibles différences par rapport au retard sur le flanc d'horloge suite à la modification des temps de propagation.

3. Système selon l'une des revendications 1 ou 2, **caractérisé en ce que** la chaîne de registres, en combinaison avec des portes logiques, ne génère un signal de réponse qu'en réponse à un modèle d'interrogation déterminé, différents transpondeurs pouvant réagir à différents modèles d'interrogation grâce à différentes combinaisons de la logique - également programmable au choix.

4. Système selon l'une des revendications 1 à 3, **caractérisé en ce que** des signaux radio à large bande, à large bande pulsée, OFDM ou UltraWideband sont utilisés.

5. Système selon l'une des revendications 1 à 4, **caractérisé en ce que,** pour la détection précise du signal de réponse dans l'unité d'interrogation, une horloge d'un convertisseur ADC (DSO-ADC1) enregistrant la réponse est également retardée en même temps qu'un signal de déclenchement du convertisseur A DC par l'intermédiaire d'un autre élément de retard variable, qui est de construction identique à l'élément de retard existant (VDLY1) et qui est commandé de la même manière.

6. Système selon l'une des revendications 1 à 5, caractérisé en **ce qu**'une intégration est effectuée dans un système de transmission de données standard existant tel que IEEE WLAN, ETSI LTE ou Bluetooth, en interprétant une caractéristique de signal ou le début du paquet comme une impulsion d'interrogation ou de réponse.

7. Détecteur d'impulsions chirp, pour un système de détermination de position ou de mesure de distance par mesure du temps de propagation selon la revendication 1 ou 2, constitué d'au moins un démodulateur en quadrature I/Q (IQDEM1) alimenté par au moins un oscillateur local (LO1) avec un circuit d'évaluation monté en aval - dans ce qui suit, c'est toujours la fréquence interne locale appliquée aux mélangeurs (MX1, MX2) du démodulateur en quadrature est appelée fréquence de l'oscillateur local, même si la fréquence de l'oscillateur local injectée de l'extérieur dans le composant est préalablement multipliée ou divisée en interne -, **caractérisé en ce que,** dans le circuit d'évaluation suivant, entre les deux sorties I et Q du démodulateur en quadrature, un déphasage d'environ 90 degrés, plus un multiple entier - y compris le nombre entier zéro - de 180 degrés, est d'abord introduit par des déphaseurs et/ou des filtres (HP1, LP1) et les sorties ainsi déphasées sont combinées dans au moins un multiplicateur (MUL1, MUL2) ou un mélangeur, de sorte que le signal de sortie du détecteur présente un passage par zéro lorsque la fréquence de l'oscillateur local est atteinte par la fréquence chirp.

8. Détecteur d'impulsions en chirp selon la revendication 7, caractérisé en **ce qu**'une sortie du démodulateur en quadrature est déphasée au moyen d'au moins un filtre passe-haut (HP1, HP2), ce qui permet en outre de forcer l'abaissement du signal de sortie à des fréquences de chirp proches de la fréquence de l'oscillateur local.

9. Détecteur d'impulsions chirp selon la revendication 7, **caractérisé en ce qu'**une sortie du démodulateur en quadrature est déphasée au moyen d'au moins un filtre passe-bas (LP1, LP2), ce qui permet en outre de supprimer les fréquences parasites à haute fréquence en dehors de la gamme de fréquences de l'impulsion chirp.

10. Détecteur d'impulsions chirp selon les revendications 8 et 9, **caractérisé en ce que** les filtres passe-haut et passe-bas sont des filtres R/C de premier ordre ou des réseaux de filtres R/C avec un déphasage résultant inhérent entre les deux trajets de 90 degrés au total.

11. Détecteur d'impulsions chirp selon l'une des revendications 8 à 10 ou une combinaison de celles-ci, **caractérisé en ce que,** symétriquement, chaque sortie I et Q du démodulateur en quadrature (IQDEM1) est appliquée à la fois à au moins un filtre passe-haut (HP1, HP2) ou premier déphaseur et à au moins un filtre passe-bas ou deuxième déphaseur (LP1, LP2), ensuite, au moins deux multiplicateurs (MUL1, MUL2) ou mélangeurs multiplient chacun le signal d'une sortie I ainsi filtrée ou déphasée par le signal d'une sortie Q ainsi filtrée ou déphasée, et les signaux de sortie des multiplicateurs ou mélangeurs sont soustraits (SUB1) ou additionnés pour obtenir un signal de détection global de haute qualité.

**12.** Détecteur d'impulsions chirp selon l'une des revendications 8 à 11 ou une combinaison de celles-ci , **caractérisé en ce que** la direction du passage par zéro du signal de détection généré par au moins un multiplicateur (MUL1, MUL2) ou un mélangeur, qui décrit la direction de la variation de fréquence du chirp, est évaluée en tant que signal numérique pour une transmission de données supplémentaire.

**13.** Détecteur d'impulsions chirp selon l'une des revendications 7 à 12 ou une combinaison de celles-ci, **caractérisé en ce qu'**il est mis en oeuvre sur un circuit intégré d'un transpondeur ou d'une unité d'interrogation d'un système de détermination de position ou de mesure de distance par radio, qui utilise des impulsions chirp pour la localisation, éventuellement en combinaison avec un filtre de compression d'impulsions.

**14.** Unité d'interrogation pour un système de détermination de position ou de mesure de distance par mesure du temps de propagation, en tant que composant d'un tel système selon la revendication 1, **caractérisée en ce que** cette unité d'interrogation présente au moins les caractéristiques de l'une des revendications 1 à 6, qui y sont attribuées à l'unité d'interrogation.

**15.** Transpondeur pour un système de détermination de position ou de mesure de distance par mesure du temps de propagation, en tant que composant d'un tel système selon la revendication 1, **caractérisé en ce que** ce transpondeur présente au moins les caractéristiques de l'une des revendications 1 à 6, qui y sont attribuées au transpondeur.

## Bild 1

Bild 2

Bild 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0740801 B1
- WO 2007131987 A1
- US 3969725 A
- DE 165546
- DE 19743132 C2
- US 8976060 B2
- DE 19941428 A1
- DE 10255880 A1
- US 4532516 A

- WO 2004027449 A1
- US 6473028 B1
- US 4325146 A
- US 5298962 A
- US 4106020 A
- EP 1490708 B1
- EP 0472024 A2
- US 4333080 A
- DE 102015013453

**In der Beschreibung aufgeführte Nicht-Patentliteratur**

- **SAHINOGLU, Z. ; GEZICI, S ; GUVENC, I.** Ultra-wideband Positioning Systems. Cambridge, 2008